# EUROPEAN PATENT SPECIFICATION

(11) **EP 4 343 109 B1**
(45) Date of publication and mention of the grant of the patent: **02.04.2025**
(21) Application number: 22196856.3
(22) Date of filing: 21.09.2022
(51) Int. Cl.: E21B 7/28, E21B 10/10, E21B 47/13, G06K 19/07

(54) **RAISE BORING TOOL WITH A DIGITAL IDENTIFICATION TAG**
HEBEBOHRWERKZEUG MIT EINEM DIGITALEN IDENTIFIKATIONSETIKETT
OUTIL DE FORAGE MONTANT AVEC ÉTIQUETTE D'IDENTIFICATION NUMÉRIQUE

(43) Date of publication of application: 27.03.2024
(73) Proprietor: Sandvik Mining and Construction Tools AB, 811 34 Sandviken (SE)
(72) Inventor: Loikkanen, Joona, 81181 Sandviken (SE); Lindblom, Anders, 81181 Sandviken (SE)
(74) Representative: Sandvik

(56) References cited:
- EP-A1- 3 626 848
- EP-A1- 3 868 997
- WO-A1-2021/162611
- CN-U- 210 264 542
- US-A1- 2009 205 820
- US-A1- 2010 096 455

## Description

### Field of invention

The present invention relates to a roller cutter for a raise boring tool comprising a digital identification tag.

### Background art

Raise boring tools have a drill head that is used for drilling a raise by reaming a pilot hole to the desired final diameter. The drill bit is usually composed of a number of roller cutters which are arranged in an annular pattern on a reamer body and are rotated at the same time as the reamer is fed upwardly, thus disintegrating the rock around the pilot hole. During the drilling the stem is located in the pilot hole, which has been drilled in advance.

Raise boring tools are normally identified by stamping or engraving a serial number, part number and / or model number on the tool. However, the problem is that the raise boring tool and especially the roller cutters are exposed to harsh environments including high temperatures and wear from dirt and dust and therefore the stamped or engraved identification is prone to being worn away; and even if they do remain intact in order to be read after drilling the tool needs cleaning. A further problem is that this form of identification is inefficient and unable store data related to the drilling operation.

Such a prior art raise boring tool is for instance known from EP 3 868 997 A1.

Therefore, the problem to be solved is how to provide reliable storage of product information and operational information.

### Summary of the Invention

It is an objective of the present invention to provide reliable storage of information on a raise boring tool and to be able to store operational information. This objective is achieved by providing a roller cutter for a raise boring tool comprising: a journal; a cutter shell positioned radially around a journal; wherein the journal comprises an external surface from which a journal end protrudes from; a seal retainer positioned between the journal and the roller cutter; characterized in that: at least one digital identification tag is located on the roller cutter. Advantageously, the inclusion of the digital identification tag on the roller cutters provides a means of digital information storage, which is a more efficient process for identifying and locating components. It enables easier stock control and locating of the parts and enables information acquisition and identification of the tool when it is used multiple times. The information can be read or stored in a simple way. Furthermore, information relating to the drilling operation can also be stored on the identification tag. Further, the life cycle of the product can be tracked.

In one embodiment the digital identification tag is a radio frequency identification tag (RFID). Advantageously, RFID tags are able to remain intact even in harsh environments. Further, if the digital identification tag is in the form of an RFID tag then the data can be read without needing to clean the tool first, making for a more efficient process.

In one embodiment the digital identification tag is encoded with one-dimensional or two-dimensional optical machine-readable code. Advantageously, this enables the identification tag to be positioned beneath metal surfaces without affecting its readability, thereby enabling the identification tag to be located in positions that are less exposed to wear.

In one embodiment the digital identification tag is a Quick Response (QR) code, a High Capacity Coloured Two Dimensional Code, a European Article Number code, a DataMatrix code, or a MaxiCode. Advantageously if a data matrix code is used more information can be stored in a smaller area. Further, only part of the data matrix code needs to remain intact in order for the information to be read, therefore even if the data matrix code is slightly damaged the information can still be read. It may be preferable that the ID tag used has an industry standard associated with it.

In one embodiment the identification tag is etched, engraved, impressed, imprinted, or painted on. Advantageously, by having the identification marker etched, engraved, impressed, imprinted, or painted to the first coupling part there is no need for any special marker holding units which would require a special design of the processing tool body in order to make room for such a marker holding unit. A further benefit of not requiring a special marker holding unit is that the risk of unbalances in the processing tool body can be reduced. Preferably the identification marker is laser engraved onto the base of the indentation. Advantageously, the desired location can be reached most easily using a laser.

In one embodiment a second identification tag is positioned on a surface that is not exposed to the external environment when the raise boring tool is in operation. Advantageously, this provides the combination of an external identification that is easily accessible for reading the data without having to disassemble the rotary cutter bit together with an identification tag positioned internally, which will not be exposed to wear, thus providing a backup in case the externally positioned identification tag is worn away.

In one embodiment the second identification tag is encoded with one-dimensional or two-dimensional optical machine- readable code, such as a DataMatrix code.

In one embodiment the identification tag is located on the journal. Advantageously, this location is less exposed to wear as it is not in contact with the rock during the drilling operation. Depending on the exact positioning the identification tag may be positioned to be either more accessible or less exposed to wear depending on which property is most important in the specific application.

In one embodiment the identification tag is located on the external surface of the journal in the section between the seal retainer and the journal end. Advantageously, this location is easily accessible for ease of reading the data stored on the identification tag and less exposed to wear.

In one embodiment the identification tag is located on an axially endmost surface of the journal end. Advantageously, this location is easily accessible for ease of reading the data stored on the identification tag without being exposed to high wear.

In one embodiment the identification tag is located on a radial side surface of the journal end. Advantageously, this location is easily accessible for ease of reading the data stored on the identification tag without being exposed to high wear.

In one embodiment the identification tag is located on the journal in a position inside the cutter shell when the cutter shell is mounted on the saddle. Advantageously, this location is less exposed to wear as it is not in contact with the rock during the drilling operation.

In one embodiment the identification tag is located on a removable component that is inserted in the roller cutter. Advantageously, this means that the identification tag is less effected by heat and is therefore more likely to survive. Further, it is easily accessible and simple to replace / add on to existing products.

In one embodiment the identification tag is located on the seal retainer. Advantageously, this location is both easily accessible and well protected from wear.

### Brief description of drawings

A specific implementation of the present invention will now be described, by way of example only, and with reference to the accompanying drawings in which:
Figure 1 is a schematic drawing of the raise boring tool.
Figure 2 is a schematic drawing of the roller cutter with a digital identification tag.
Figure 3 is a schematic drawing of the roller cutter with a digital identification tag located on the axially endmost surface of the journal end.
Figure 4 is a schematic drawing of the roller cutter with a digital identification tag located on the radial side surface of the journal end.
Figure 5 is a schematic drawing of a roller cutter with a removable component provided with a digital identification tag.
Figure 6 is a schematic drawing of a roller cutter with a digital identification tag located on the seal retainer.

### Detailed description

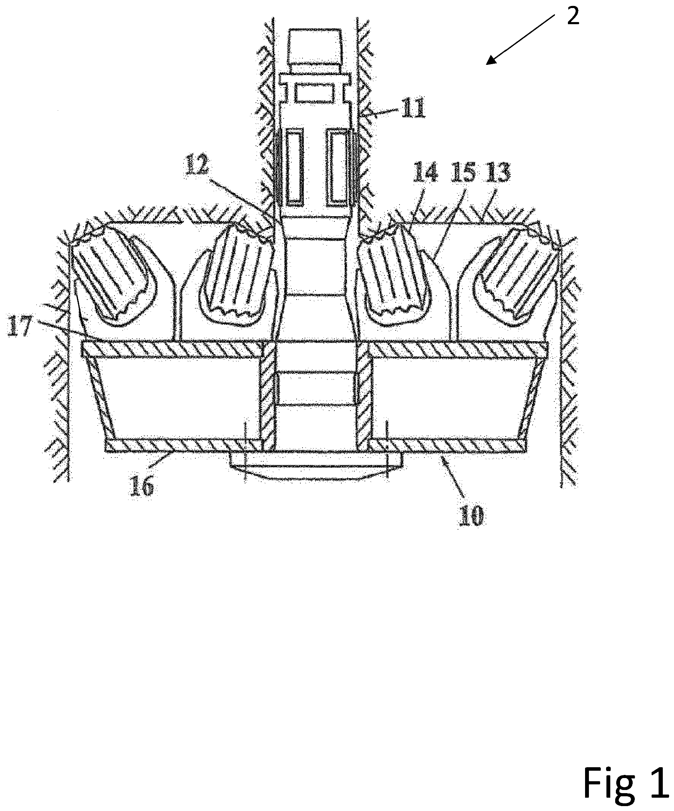

Figure 1 shows how a pilot hole 11, which is pre-drilled in known way, between an upper and lower level (not shown). A drill head 10 (otherwise known as a reaming head) is connected to a drive stem 12, then the drill head 10 is rotated and pressed against a ringshaped surface 13 that surrounds the pilot hole 11. The drill head 10 comprises a body 16 and a plurality of roller cutters 14 which are rotatably mounted on the body 16 using saddles 15 (otherwise known as fasteners). The drive stem 12 is connected to the body 16. The body 16 has a mounting surface 17 on which the saddles are carried.

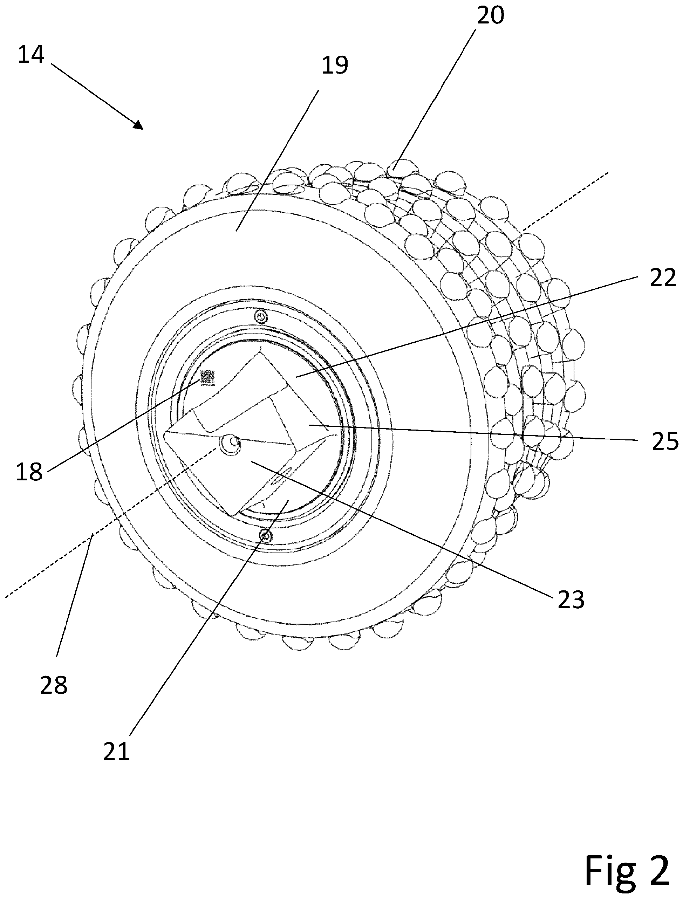

Figure 2 shows that each roller cutter 14 having a longitudinal axis 28 that comprises a cutter shell 19 (otherwise known as a mantle) which is equipped with a plurality of cutting bits 20 (otherwise known as inserts or buttons) and a journal 21 (otherwise known as a bearing shaft) about which the cutter shell 19 rotates. The cutting bits 20 are typically made from hard metal or other highly wear resistant material. The cutter shell 19 rotates around the journal 21. A seal retainer 26 is positioned between the journal 21 and the cutter shell 19 to prevent contaminants getting into the roller cutter 14 and prevent grease from escaping the roller cutter 14. A digital identification tag 18 is located on at least one of the roller cutters 14. The journal 21 comprises a journal end 23 that protrudes outwardly from the external surface 22.

By digital identification tag 18 it is hereby meant any form of identification tag that can be read using electronic technology.

In one embodiment the digital identification tag 18 is a radio frequency identification tag (RFID).

In one embodiment, the digital identification tag 18 is in the form of an RFID tag. The RFID tag could be press fit in the drill hole (not shown). The RFID tag could be stored in a region that is already recessed or a newly created hole. Advantageously, this makes the installation of the RFID tag onto the roller cutter 14 easy.

In another embodiment the digital identification tag 18 is encoded with one-dimensional or two-dimensional optical machine-readable code. The digital identification tag 18 could for example be in the form of a Quick Response (QR) code, a High Capacity Coloured Two Dimensional Code, a European Article Number code, a DataMatrix code, or a MaxiCode.

In one embodiment the digital identification tag 18 is etched, engraved, impressed, imprinted, or painted on.

In one embodiment the roller cutter 14 further comprises a second digital identification tag 18 positioned on a surface that is not exposed to the external environment when the raise boring tool 2 is in operation. Preferably, the second digital identification tag 18 is encoded with one-dimensional or two-dimensional optical machine- readable code, such as a DataMatrix code, but could also be any other suitable form of digital identification tag 18.

In one embodiment the digital identification tag 18 is located on a surface of at least one of the roller cutters 14 that is stationary whilst the tool 2 is drilling. Advantageously, such surfaces are less exposed to wear.

In one embodiment the digital identification tag 18 is visible when the tool 2 is assembled.

As shown in figure 2, in one embodiment the digital identification tag 18 is located on the journal 21. For example, as shown in figure 2, the digital indentation tag 18 is located on an external surface 22 of the journal 21 in the section between the seal retainer 26 and the journal end 23.

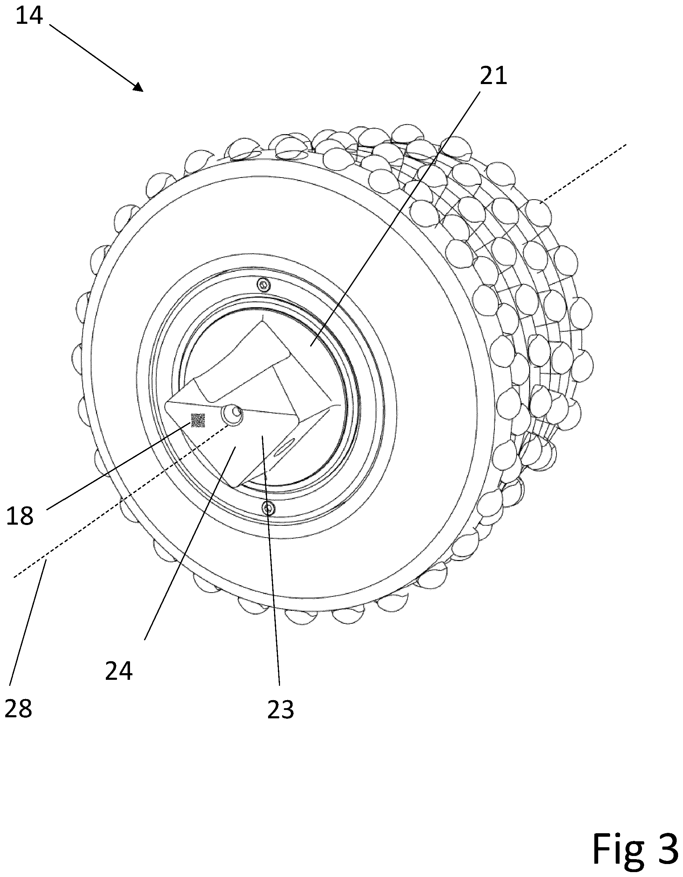

Figure 3 shows another embodiment wherein the digital identification tag 18 is located on an axially endmost surface 24 of the journal end 23. The journal end 23 usually has a square shape but could be any other suitable shape.

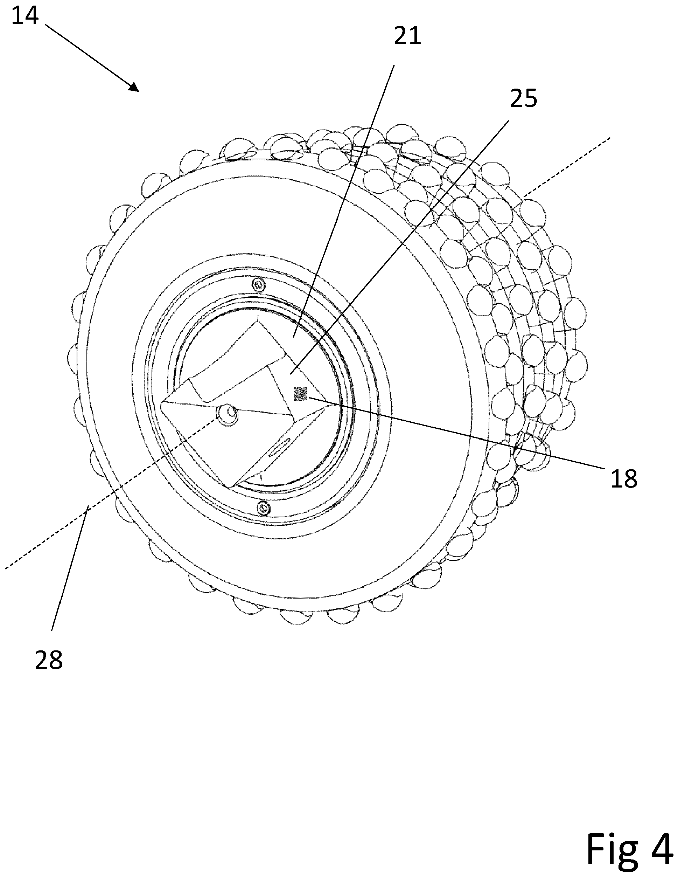

Figure 4 shows another embodiment wherein the identification tag 18 is located on a side surface 25 of the journal end 23. The side surface 25 of the journal end 23 extends radially from the longitudinal axis 28.

In another embodiment the identification tag 18 is located on the journal 21 in a position inside the cutter shell 19 when the cutter shell 19 is mounted on the saddle 15.

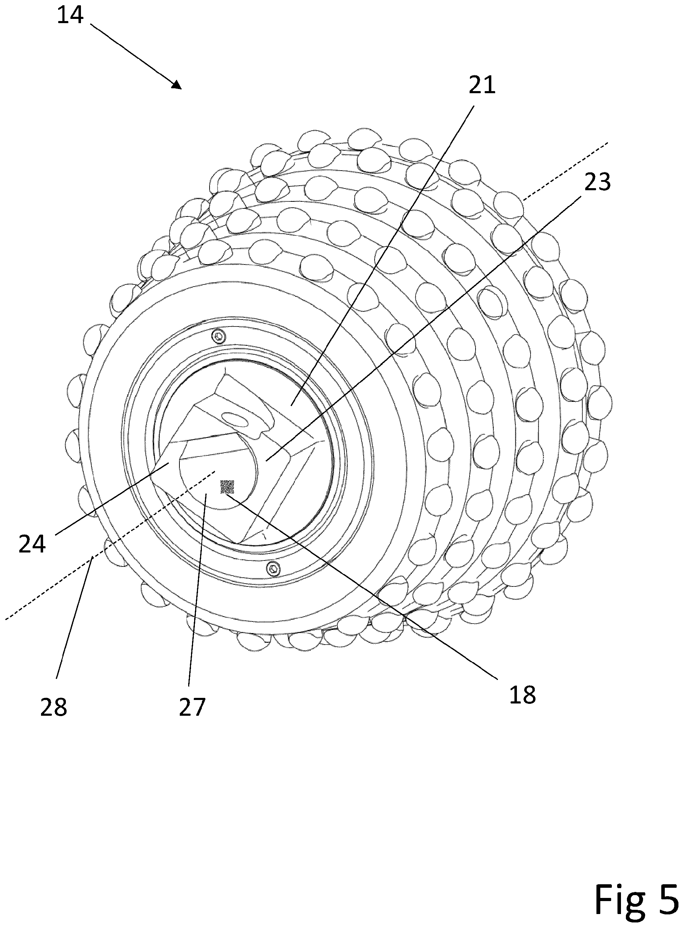

Figure 5 shows an alternative embodiment wherein the identification tag 18 is located on a removable component 27 that is inserted in the roller cutter 14. The removable component 27 could for example be in the form of a plug but could be any other suitable component that can be inserted and removed as required from the tool. The removable component 27 could be made of any material, for example, the removable component 27 could be made of plastic, however it could be made of any other suitable material. Preferably, the removable component 27 is inserted into a cavity in the journal 21, even more preferably the removable component 27 is inserted into a cavity in the journal end 23, even more preferably the removable component 27 is located in the axially endmost surface 24 of the journal end 23 but it could also be inserted into a cavity in any other suitable location on the roller cutter 14.

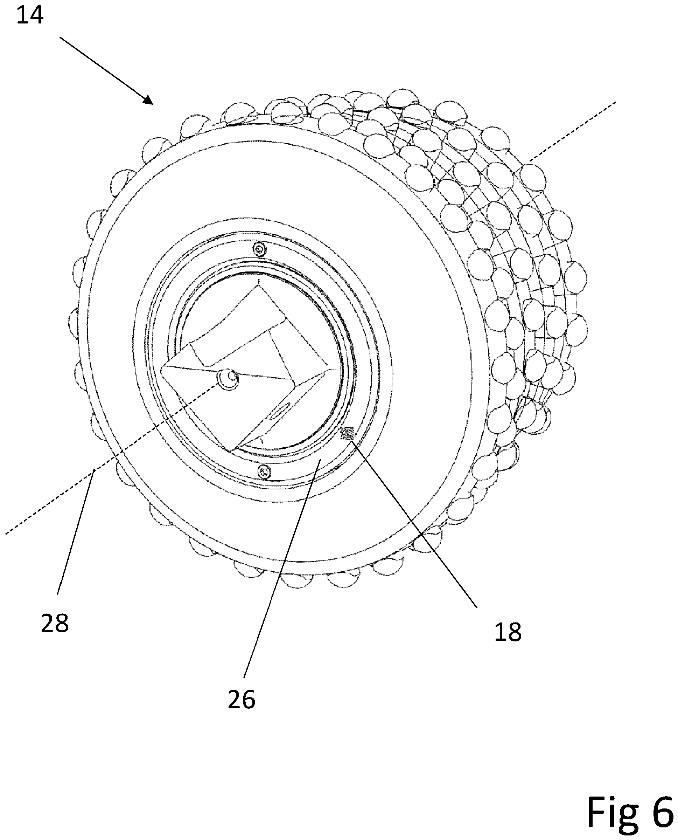

Figure 6 shows another embodiment wherein the digital identification 18 is located on the seal retainer 26.

## Claims

1. A roller cutter (14) for a raise boring tool (2) comprising:
a journal (21);
a cutter shell (19) positioned radially around a journal (21);
wherein the journal (21) comprises an external surface (22) from which a journal end (23) protrudes from;
a seal retainer (26) positioned between the journal (21) and the roller cutter (14);
a longitudinal axis (28);
**characterised in that**:
at least one digital identification tag (18) is located on the roller cutter (14);
wherein
the identification tag (18) is located on the journal (21).

2. The raise boring tool (2) according to claim 1 wherein the digital identification tag (18) is a radio frequency identification tag (RFID).

3. The raise boring tool (2) according to claim 1 wherein the digital identification tag (18) is encoded with one-dimensional or two-dimensional optical machine-readable code.

4. The raise boring tool (2) according to claim 3 wherein the digital identification tag (18) is a Quick Response (QR) code, a High Capacity Coloured Two Dimensional Code, a European Article Number code, a DataMatrix code, or a MaxiCode.

5. The raise boring tool (2) according to claim 3 or claim 4 wherein the identification tag (18) is etched, engraved, impressed, imprinted, or painted on.

6. The raise boring tool (2) according to any of the previous claims further comprising a second identification tag (18) positioned on a surface that is not exposed to the external environment when the raise boring tool (2) is in operation.

7. The raise boring (2) according to claim 6 wherein the second identification tag (18) is encoded with one-dimensional or two-dimensional optical machine- readable code, such as a DataMatrix code.

8. The raise boring tool (2) according to any of the previous claims wherein the identification tag (18) is located on the external surface (22) of the journal in the section between the seal retainer (26) and the journal end (23).

9. The raise boring tool (2) according to any of the previous claims wherein the identification tag (18) is located on an axially endmost surface (24) of the journal end (23).

10. The raise boring tool (2) according to any of the previous claims wherein the identification tag (18) is located on a radial side surface (25) of the journal end (23).

11. The raise boring tool (2) according to any of the previous claims wherein the identification tag (18) is located on the journal (21) in a position located inside the cutter shell (19) when the cutter shell (19) is mounted in the saddle (15).

## Patentansprüche

1. Rollenbohrmeißel (14) für ein Hebebohrwerkzeug (2), umfassend:
einen Zapfen (21);
eine Schneidhülse (19), die radial um einen Zapfen (21) herum positioniert ist;
wobei der Zapfen (21) eine Außenoberfläche (22) umfasst, aus der ein Zapfenende (23) hervorspringt;
einen Dichtungshalter (26), der zwischen dem Zapfen (21) und dem Rollenbohrmeißel (14) positioniert ist;
eine Längsachse (28);
**dadurch gekennzeichnet, dass**:
sich auf dem Rollenbohrmeißel (14) mindestens ein digitales Identifikationsetikett (18) befindet;
wobei
sich das Identifikationsetikett (18) auf dem Zapfen (21) befindet.

2. Hebebohrwerkzeug (2) nach Anspruch 1, wobei das digitale Identifikationsetikett (18) ein Hochfrequenz-Identifikationsetikett (RFID) ist.

3. Hebebohrwerkzeug (2) nach Anspruch 1, wobei das digitale Identifikationsetikett (18) mit einem eindimensionalen oder zweidimensionalen maschinenlesbaren optischen Code codiert ist.

4. Hebebohrwerkzeug (2) nach Anspruch 3, wobei das digitale Identifikationsetikett (18) ein Quick Response- (QR-) Code, ein zweidimensionaler High Capacity Color Barcode, ein European Article Number-Code, ein DataMatrix-Code oder ein MaxiCode ist.

5. Hebebohrwerkzeug (2) nach Anspruch 3 oder Anspruch 4, wobei das Identifikationsetikett (18) geätzt, graviert, geprägt, gedruckt oder aufgemalt ist.

6. Hebebohrwerkzeug (2) nach einem der vorstehenden Ansprüche, das weiter ein zweites Identifikationsetikett (18) umfasst, das auf einer Oberfläche positioniert ist, die, wenn das Hebebohrwerkzeug (2) in Betrieb ist, keiner Außenumgebung ausgesetzt ist.

7. Hebebohrwerkzeug (2) nach Anspruch 6, wobei das zweite Identifikationsetikett (18) mit einem eindimensionalen oder zweidimensionalen maschinenlesbaren optischen Code, wie beispielsweise einem DataMatrix-Code, codiert ist.

8. Hebebohrwerkzeug (2) nach einem der vorstehenden Ansprüche, wobei sich das Identifikationsetikett (18) auf der Außenoberfläche (22) des Zapfens in dem Teilstück zwischen dem Dichtungshalter (26) und dem Zapfenende (23) befindet.

9. Hebebohrwerkzeug (2) nach einem der vorstehenden Ansprüche, wobei sich das Identifikationsetikett (18) an einer axial äußersten Oberfläche (24) des Zapfenendes (23) befindet.

10. Hebebohrwerkzeug (2) nach einem der vorstehenden Ansprüche, wobei sich das Identifikationsetikett (18) auf einer radialen Seitenoberfläche (25) des Zapfenendes (23) befindet.

11. Hebebohrwerkzeug (2) nach einem der vorstehenden Ansprüche, wobei sich das Identifikationsetikett (18) auf dem Zapfen (21) in einer Position befindet, die sich, wenn die Schneidhülse (19) im Sattel (15) montiert ist, innerhalb der Schneidhülse (19) befindet.

## Revendications

1. Trépan à molettes (14) pour un outil de forage montant (2) comprenant :
un tourillon (21) ;
une enveloppe de trépan (19) positionnée radialement autour d'un tourillon (21) ;
dans lequel le tourillon (21) comprend une surface externe (22) à partir de laquelle une extrémité de tourillon (23) fait saillie ;
un dispositif de retenue de joint (26) positionné entre le tourillon (21) et le trépan à molettes (14) ;
un axe longitudinal (28) ;
**caractérisé en ce que** :
au moins une étiquette d'identification numérique (18) est située sur le trépan à molettes (14) ;
dans lequel
l'étiquette d'identification (18) est située sur le tourillon (21).

2. Outil de forage montant (2) selon la revendication 1, dans lequel l'étiquette d'identification numérique (18) est une étiquette d'identification par radiofréquence (RFID).

3. Outil de forage montant (2) selon la revendication 1, dans lequel l'étiquette d'identification numérique (18) est codée avec un code optique unidimensionnel ou bidimensionnel lisible par machine.

4. Outil de forage montant (2) selon la revendication 3, dans lequel l'étiquette d'identification numérique (18) est un code à réponse rapide (QR), un code bidimensionnel coloré à haute capacité, un code de numérotation européenne des articles, un code DataMatrix ou un MaxiCode.

5. Outil de forage montant (2) selon la revendication 3 ou la revendication 4, dans lequel l'étiquette d'identification (18) est gravée chimiquement, gravée mécaniquement, estampée, imprimée ou peinte.

6. Outil de forage montant (2) selon l'une quelconque des revendications précédentes, comprenant en outre une seconde étiquette d'identification (18) positionnée sur une surface qui n'est pas exposée à l'environnement extérieur lorsque l'outil de forage montant (2) est en fonctionnement.

7. Forage montant (2) selon la revendication 6, dans lequel la seconde étiquette d'identification (18) est codée avec un code optique unidimensionnel ou bidimensionnel lisible par machine, tel qu'un code DataMatrix.

8. Outil de forage montant (2) selon l'une quelconque des revendications précédentes, dans lequel l'étiquette d'identification (18) est située sur la surface externe (22) du tourillon dans la section entre le dispositif de retenue de joint (26) et l'extrémité de tourillon (23).

9. Outil de forage montant (2) selon l'une quelconque des revendications précédentes, dans lequel l'étiquette d'identification (18) est située sur une surface axialement la plus à l'extrémité (24) de l'extrémité de tourillon (23).

10. Outil de forage montant (2) selon l'une quelconque des revendications précédentes, dans lequel l'étiquette d'identification (18) est située sur une surface latérale radiale (25) de l'extrémité de tourillon (23).

11. Outil de forage montant (2) selon l'une quelconque des revendications précédentes, dans lequel l'étiquette d'identification (18) est située sur le tourillon (21) dans une position située à l'intérieur de l'enveloppe de trépan (19) lorsque l'enveloppe de trépan (19) est montée dans la selle (15).
